# EUROPEAN PATENT SPECIFICATION

(11) **EP 2 018 497 B1**
(45) Date of publication and mention of the grant of the patent: **20.07.2011**
(21) Application number: 07730765.0
(22) Date of filing: 16.05.2007
(51) Int. Cl.: F16K 3/16, F16K 27/04

(54) **GATE VALVE**
ABSPERRSCHIEBER
ROBINET-VANNE

(30) Priority: 18.05.2006 FI 20060485; 19.09.2006 FI 20060834; 29.12.2006 FI 20061164
(43) Date of publication of application: 28.01.2009
(73) Proprietor: Maricap OY, 01450 Vantaa (FI)
(72) Inventor: SUNDHOLM, Göran, FI-04310 Tuusula (FI)
(74) Representative: Laine, Terho Tapio
(86) International application number: PCT/FI2007/050278
(87) International publication number: WO 2007/135237

(56) References cited:
- FR-A- 1 464 048
- GB-A- 918 198
- JP-A- 61 038 271
- JP-A- 62 151 675
- JP-A- 62 242 184
- NL-A- 7 901 078

## Description

### Background of invention

The invention relates to a gate valve according to the preamble of claim 1.

Gate valves, which especially comprise a laminar gate element, have many times problems with sealing. The pressure of medium possibly prevailing in the flow path causes in the closed position of the valve bending of the gate element and weakening of sealing, which leads for the parts of certain mediums guided in the flow path, inter alia, to the dirtying of the guide and/or sealing surfaces of the valve body. This possibly impedes the movement of the gate element between the open position and the closed position. Furthermore, dirt can in some embodiments cause problems with hygiene. One has tried to solve these problems with different seal and/or valve structures. However, these have usually been complex and thus led to arrangements expensive of their costs. Specification EP0260962, for instance, describes a gate valve provided with a turnable gate element which includes above-mentioned disadvantages. Also several gate valve arrangements are known in which the valve body is cast and the gate mechanism and the gate element are complex. They are awkward and complicated of their processibility, whereby manufacturing costs are high. JP 61038271 discloses a gate valve having a metal seat.

An object of this invention is to achieve a totally new arrangement for a gate valve with which the disadvantages of known solutions are avoided. Another object of the invention is to achieve a valve structure the processibility of which is good and which is also easy from the viewpoint of assembly. A further object of the invention is to achieve an adequately good arrangement for the part of sealing.

### Brief description of invention

The gate valve is characterised by claim 1.

Furthermore, the gate valve according to the invention is characterised by what is stated in claims 2-23.

The arrangement according to the invention has numerous significant advantages. The gate valve according to the invention is excellent of its processibility. By arranging for the gate part a separate part moving in relation to the actuating body which part seals against the edges of the flow path, an extremely advantageous and reliable arrangement for a valve is achieved. By using a valve body and a gate element of laminar structure, it has been possible to achieve an easily modifiable structure for different use requirements. By arranging cleaning means into connection with the valve, it is possible to prevent the accumulation of material being conveyed in the flow path into the space between the body walls and, simultaneously, it is possible to prevent malfunctions caused by dirtying. By arranging the channel space required for cleaning on the edge of the valve body, an extremely advantageous structure operationally and in respect of its manufacturing technique is achieved. By using a profile as the edge part which comprises support surfaces for the walls of the gate valve body, an advantageous construction also from the viewpoint of the assembly of the valve is achieved. By arranging for the gate parts two parts moving in relation to each other which parts seal against the edges of the flow path, an extremely advantageous and reliable arrangement for a valve is achieved. By arranging an elastic element between the gate parts, an advantageous and easy arrangement from the viewpoint of the assembly of the valve is achieved. By using a spring element, such as a diaphragm spring element, as the elastic element, elastic characteristics can be effectively affected. The elastic element can be replaced according to the requirements of the target of application. By arranging an opening for pressure medium in the second gate part, it is possible to further affect the elastic element by means of the medium. Then, the sealing of the gate element can be further improved.

### Brief description of figures

Next, the invention will be described in detail by means of an example with reference to the accompanying drawing in which
Fig. 1 shows a valve according to the invention in a flow path open position,
Fig. 2 shows a valve according to the invention in a flow path closed position,
Fig. 3 shows a valve according to the invention as a cross-section along line III-III of Fig. 4,
Fig. 3A shows a detail A of Fig. 3 enlarged,
Fig. 4 shows a valve according to the invention,
Fig. 5 shows a valve according to the invention partially cut,
Fig. 6 shows a detail of a second embodiment of the valve according to the invention as cut in a gate element closed position,
Fig. 7 shows a further embodiment of the gate valve according to the invention partially cut,
Fig. 8 shows the valve of Fig. 7 from the direction of the actuator,
Fig. 9a shows the edge part of an embodiment of the valve according to the invention as bent from the side,
Fig. 9b shows the edge part of an embodiment of the valve according to the invention as bent from the end,
Fig. 9c shows the edge part of an embodiment of the valve according to the invention before bending from the side,
Fig. 10 shows a cross-section of the edge part of an embodiment of the valve according to the invention,
Fig. 11 shows a second embodiment of the valve according to the invention,
Fig. 12 shows a second embodiment of the valve according to the invention in a flow path closed position cut along line XII-XII of Fig. 14, in a different scale,
Fig. 13 shows a detail A of Fig. 12 enlarged,
Fig. 14 shows a second embodiment of the valve according to the invention,
Fig. 15 shows a second embodiment of the valve according to the invention from inside the valve body in a gate element open position,
Fig. 16 shows a second embodiment of the valve according to the invention from inside the valve body in a situation between the gate element open position and closed position, and
Fig. 17 is a cross-section of the edge part of a body according to an embodiment of the gate valve in accordance with the second embodiment of the invention.

### Detailed description of invention

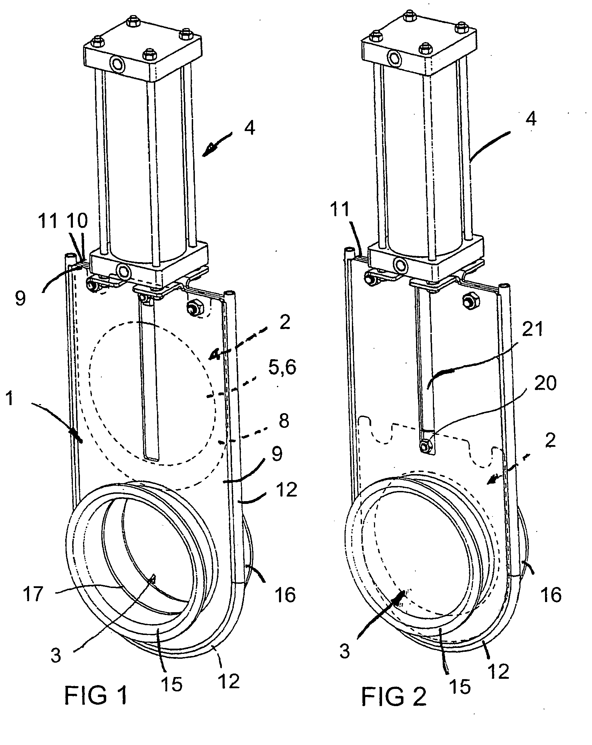

Figs. 1 and 2 show a first embodiment of a valve according to the invention as a perspective figure. A gate element of the valve is shown with dashed lines in the figure in an open position and in Fig. 2 in a closed position.

The figures show an embodiment of the valve according to the invention, especially a gate valve which comprises a body 1, a gate element 2 which is movable in the body in the cross direction in relation to a flow path 3 between at least two positions, a first position in which the flow path 3 is open and a second position in which the flow path is closed. Typically, the valve also comprises means 4 for moving the gate element 2 between at least two said positions. The gate element 2 comprises two gate parts 5, 6, between which gate parts 5, 6, a force effect can be provided which prevails in gate parts 5, 6 in the opposite directions substantially in the direction of the flow path 3 pressing the gate parts 5, 6 towards the edges i.e. the edge area of the flow path at least in the position of the gate element in which the flow path is closed. In the figures, the flow path 3 passes via channel parts 15, 16 arranged in the valve body through the valve body 1. In the embodiment of the figure, the gate element 2 is arranged to move by means of an actuator 4 between an upper position in which the flow path is open and a lower position in which the flow path is closed. The gate element 2 is arranged to move in a space 11 between body walls 9, 10. The surfaces of the walls 9, 10 facing each other typically operate as the guide surfaces of the gate element. Onto the wall of the flow channel is formed a gap from which the gate element moves and closes the flow channel. The gate parts 5, 6 of the gate element 2 extend outside the edges of the flow opening of the flow channel 3. Typically, in connection with a conventional circular flow opening of the cross-section of the flow path, the diameter of the gate part 5, 6 is thus larger than the diameter of the flow opening of the flow path 3 in the intersection of the gate element 2 and the flow path 3.

Between the gate parts 5, 6, there is at least one elastic element 7. In the case of the figures, the elastic element 7 is an annular element. It can also be of different shape. Depending on the target of application, there can be several elements.

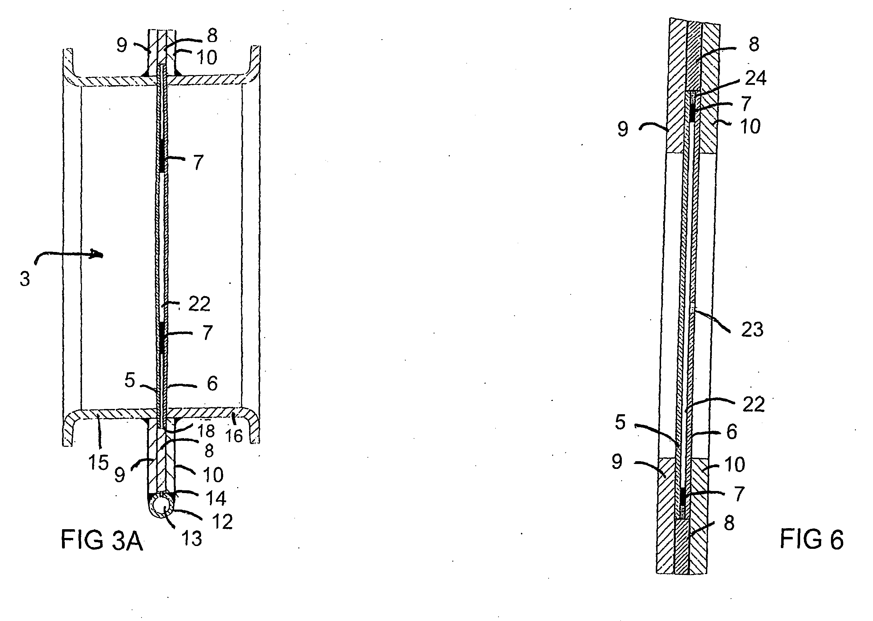

Alternatively, the valve can comprise means for providing a force effect between the gate parts 5, 6 by means of pressure medium. It is e.g. possible to consider that between the gate parts there is a chamber space 22 which is fillable with pressure medium. Fig. 6 shows an example of such an embodiment which will be described below in detail. Correspondingly, it can be considered that between the gate parts there is an elastic cushion which is filled with pressure medium at least when the gate element closes the flow path 3.

The gate element 2 comprises an actuating body 8 along with which the gate parts 5, 6 are arranged movable. In the embodiment of Figs. 1-5, the actuating body is a laminar part in which is formed a space 18 for the gate parts 5, 6. In the embodiment of the figures, the space 18 is an opening formed in the actuating body in which the gate parts are arrangeable. Then, the edges of the opening 18 operate as the support surfaces of the gate parts 5, 6 when moving the gate element.

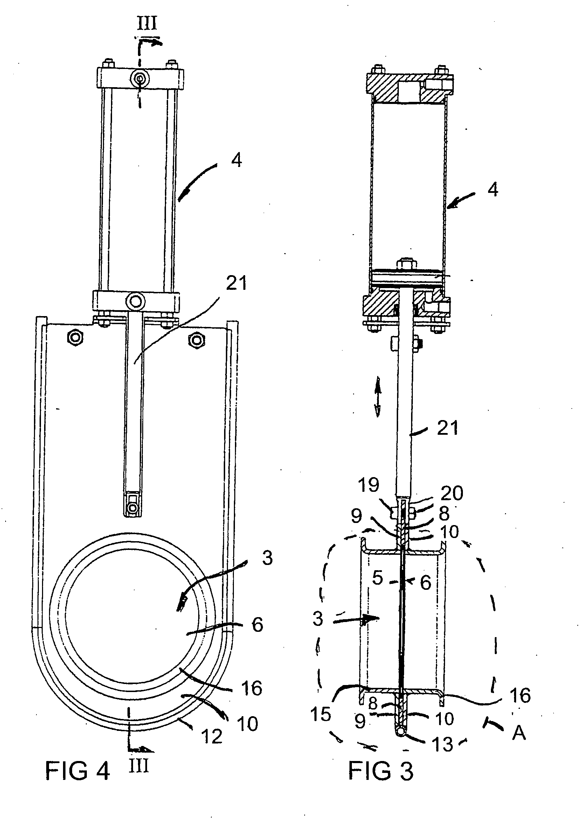

According to an embodiment, the gate part 5, 6 is formed at least partially of elastic material. Then, the gate parts 5, 6 are able to bend a little in the opposite directions i.e. typically to bulge from their middle part in the direction of the flow channel, when they are in the closed position of the flow path. In Fig. 3A, the bending of the gate parts is clearly visible.

The gate part 5, 6 is according to an advantageous embodiment a laminar part. In the embodiments of Figs. 1-5, the gate parts are circular plate parts. Naturally, any other shape is possible in accordance with the target of application.

In the embodiment of the figures, the valve body 1 comprises the first wall part 9 and the second wall part 10 and the space 11 remaining between them for the gate element 2. The gate element is moved in the space 11 in the embodiment of the figure by means of the actuator 4 which is a cylinder-piston combination. The actuator is in the embodiment of the figures fastened to shoulders formed in the body by fastening means. A piston rod operates as a valve stem 21 which is joined with joining means 19, 20 to the gate element 2. The gate element comprises the actuating body 8 in the figure.

The gate part 5, 6 is arranged in the space 18 formed in the actuating part 8 freely movable along the actuating part 8 between the guide surfaces of the body part.

According to an advantageous embodiment, the elastic element 7 is of rubber, plastic or equivalent elastic material. The gate part is typically of stiffer material than the elastic element.

According to a second embodiment, the elastic element 7 is a spring element, such as a diaphragm spring element.

In an embodiment according to the embodiment of Fig. 6, one of the gate parts comprises an opening 23 into a space 22 between the gate parts. Then, from the medium channel 3, pressure prevailing on the side of pressure is able to pass into the space 22 between the gate parts. Between the gate parts, there is the elastic element 7. The prevailing pressure aims at pressing on one hand the gate part and especially the elastic element 7 which is pressed more tightly against the walls 9, 10 of the gate parts 5, 6. Based on the differences of pressure areas, a desired pressing force is provided in the elastic element 7. Between the gate parts 5, 6, there is an edge part 24 which is in the edge area of the gate parts or in its vicinity. A module comprising the edge parts and the elastic element of the gate parts is arranged in the opening 18 of the actuating body moving along the actuating body.

According to an embodiment, the actuating body 8 is a laminar part in which the opening 18 has been arranged in which opening the gate part 5, 6 and the elastic element 7 between them are arranged to fit. The opening 18 has been formed e.g. by die cutting or cutting, such as by laser cutting. Then, an arrangement fulfilling dimensional tolerances accurate enough is achieved. Correspondingly, the wall parts 9, 10 of the body can be of plate material and cut e.g. by laser cutting.

The surface on the side of the flow channel 3 of the first gate part 5 and the surface on the side of the flow channel 3 of the second gate part 6 extend in the closed position of the valve to a greater distance in relation to each other in the direction of the flow channel than in the open position of the valve. Then, the gate element of the valve as if bulges in the opposite direction in the flow opening sealing the opening more effectively. By using the force effect between the gate parts, leakings from the flow channel 3 in between the gate element 2 and the wall of the body 1 can be prevented more effectively.

According to an advantageous embodiment, the valve can further comprise means 14, 26, 27, 28 for cleaning at least the space 11 between the walls 9, 10 of the body part of the part.

Typically, the valve can comprise means 14, 26, 27, 28 for cleaning at least the space 11 between the walls 9, 10 of the body part of the part by spraying medium.

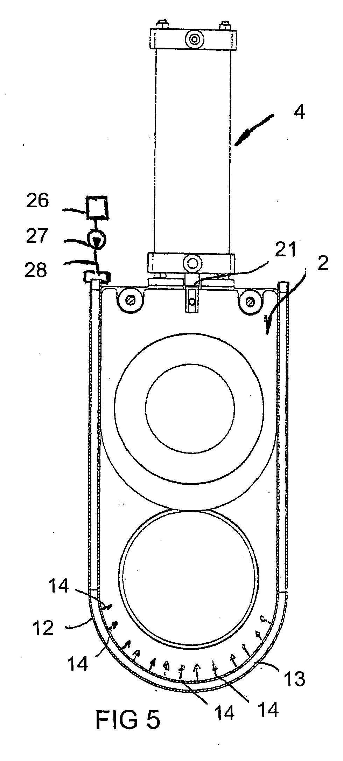

According to Fig. 5, medium can be conveyed from a medium source 26 with a pump device 27 along a channel 28 into a channel 13 of an edge part 12 and from there via openings 14 into the space 11. The openings 14. are typically arranged in the vicinity of the channel 3 in Fig. 5 especially in the area of the space 11 where the gate element 2 has to extend in the closed position.

The body 1 comprises the edge part 12 into which is arranged the channel space 13 in which there is at least one opening 14, advantageously several openings, which opens to the space 11 between the first wall part 9 and the second wall part 10 for conveying medium into the space in question. According to an embodiment of the invention, the body 1 is formed by joining the wall parts 9, 10 from their edge part 12 e.g. by welding. A channel part 15 is joined to the first wall part 9 by welding. Correspondingly, a channel part 16 is joined to the second wall part 10 by welding. In the wall parts, there naturally is the flow opening 3. Between the wall parts remains the space 11 for the gate element 2. The laminar-structured valve of the embodiment is considerably advantageous and easy to manufacture especially in smallish production runs e.g. to casting-structured valve arrangements.

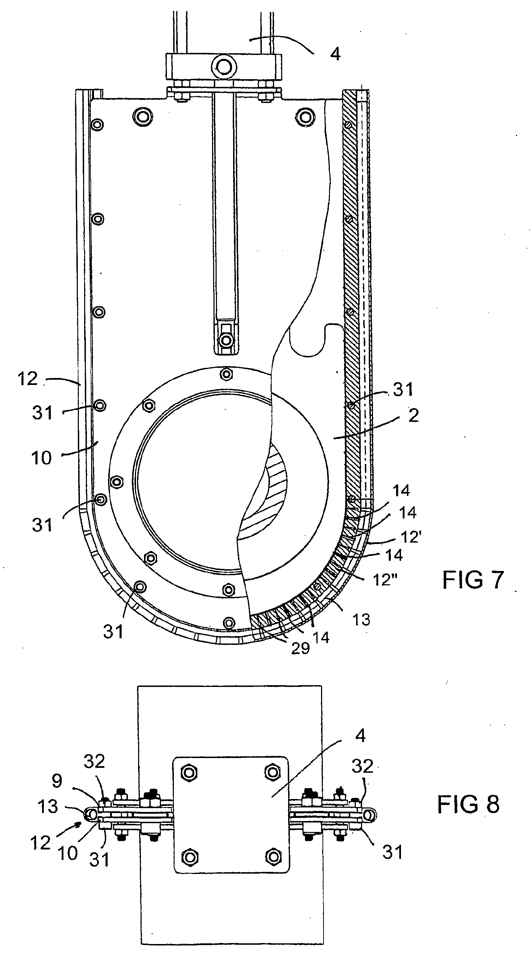

In the embodiment according to Figs. 7-10, the edge part 12 is formed of a profile in which there are a channel part 12' and a support part 12". The channel part 12' comprises the channel space 13. The support part 12" is advantageously thinner in the cross direction than the channel part 12'. The support part 12" of the edge part forms as bent a support surface for the body walls 9, 10 of the gate valve.

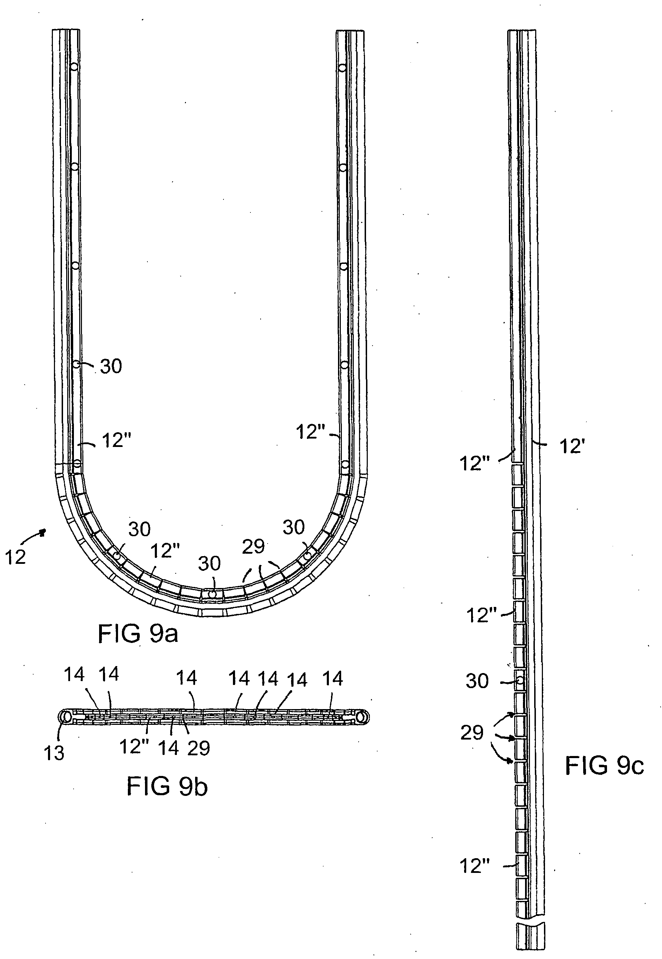

The support part 12" of the edge part comprises notches 29, whereby the edge part 12 is bent to be curved in the area comprising the notches 29. Figs. 9a and 9b show the edge part 12, formed of a profile according to the embodiment, as bent. Fig. 9c shows the edge part 12 formed of a profile as straight, before bending.

The walls 9, 10 are arranged by fastening elements 31, 32 to the support part 12" of the edge part. Then, the support part 12" remains between the walls 9, 10. In the support part 12" and corresponding points on the walls 9, 10 are formed openings 30 through which the screw part of a screw element 31 operating as the fastening element extends and, from the opposite side, by means of a counter element, such as a nut element 32, the walls 9, 10 are sealed against the support part 12". The thickness of the support part 12" is advantageously somewhat greater than the thickness of the gate element.

In the embodiment according to the figures, the channel part 12' is arranged outside the outer edge of the walls 9, 10.

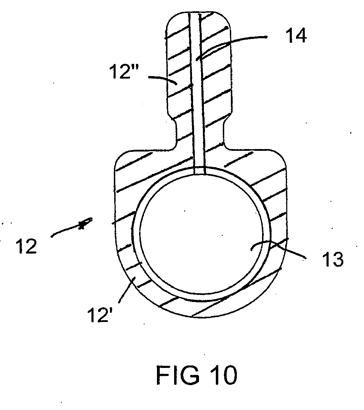

Fig. 10 shows a cross-section of the edge part 12. It shows the channel part 12' comprising the channel 13 and the support part 12" thinner than the former. In addition, the opening 14 extending from the channel space 14 through the support part 12" is drawn in the figure. The opening 14 extends from the channel space 13 through the support part 12" of the edge part 12. The edge part 12 is formed as a profile part, whereby the channel part 12' and the support part 12" are of the same piece.

The embodiment of the gate valve according to Figs. 7-10 is an extremely advantageous alternative for the welded structure. Then, inter alia, welding is avoided, whereby the assembly of the valve is very easy.

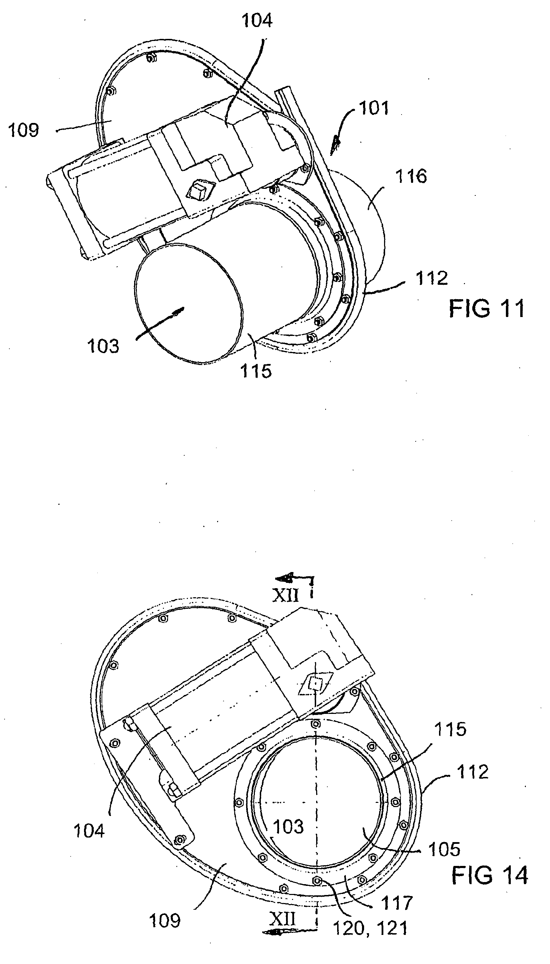

Fig. 11 shows a second embodiment of a valve according to the invention as a perspective figure.

Figs. 11-17 show a second embodiment of the valve according to the invention, especially a gate valve, which comprises a body 101, a gate element 102 which is movable in the body in the cross direction in relation to a flow path 103 between at least two positions, a first position in which the flow path 103 is open and a second position in which the flow path is closed. Typically, the valve also comprises means 104 for moving the gate element 102 between at least two said position. The gate element 102 comprises a gate part 105 and an actuating body 108 along with which the gate part is arranged movable. In the figures, the flow path 103 passes via channel parts 115, 116 arranged in the valve body through the valve body 101. In the embodiment of the figure, the gate element 102 is arranged to move by means of an actuator 104 between the first position in which the flow path is open and the second position in which the flow path is closed. The gate element 102 is arranged to move in a space 111 between body walls 109, 110 and an edge part 112. The surfaces of the walls 109, 110 facing each other typically operate as the guide surfaces of the gate element 102. In the body, there is a gap at the point of the flow channel from which gap the gate element moves and closes/opens the flow channel. The gate part 105 of the gate element 102 extends outside the edges of the flow opening of the flow channel 103 in the closed position. Typically, the cross-section of the flow path is circular according to a typical embodiment. The diameter of the gate part 105 is thus typically larger than the diameter of the flow opening of the flow path 103 at the intersection of the gate element 102 and the flow path 103.

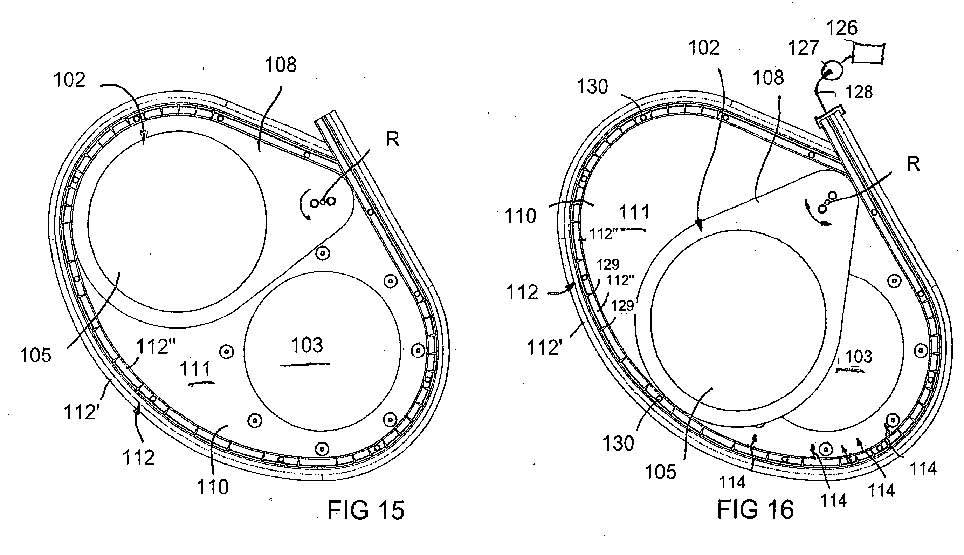

The gate element 102 comprises an actuating body 108 along with which the gate part 105 is arranged movable. In the embodiment of Figs. 15 and 16, the actuating body 108 is a laminar part in which is formed a space 118 for the gate part 105. In the embodiment of the figures, the space 118 is an opening formed in the actuating body in which the gate part 105 is arrangeable. Then, the edges of the opening 118 of the actuating body operate as the support surfaces of the gate part 105 when moving the gate element. In the embodiment of Figs. 15 and 16, the actuating body 108 is a laminar part in which is formed, e.g. by cutting, such as by laser cutting or die cutting or by some other suitable way, an opening in which the gate part 105 is arrangeable. In the embodiment of the figures, the actuating body is of the shape of a drop.

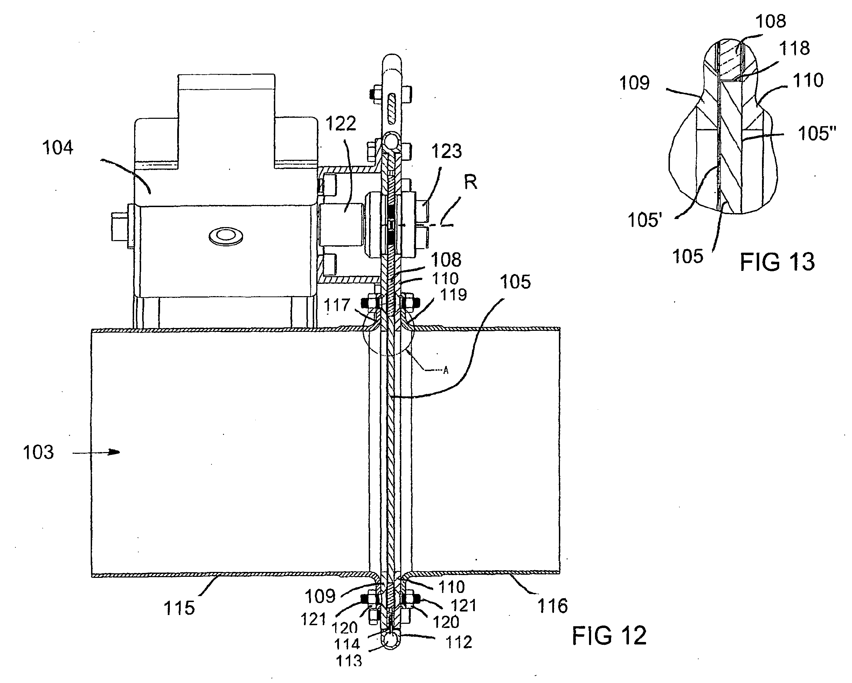

According to an embodiment, the gate part 105 is formed of plate material. The gate part 105 has been formed according to an embodiment somewhat smaller than the opening 118 of the actuating body, whereby it is able to somewhat move in the space limited by the opening and the walls 109 and 110 of the actuating body. Typically, the gate part is able to move in the direction of the flow channel 103, at least when it is in the closed position of the flow path. In Fig. 13, it is clearly visible that the gate part has pressed against one wall 110 of the body in the edge area of the flow path. Then in the flow channel 103, from the effect of the pressure difference between pressures prevailing on different sides of the gate element 102 of the valve is achieved the pressing of the gate part 105 against at least one of the walls 109, 110 and simultaneously the sealing of the gate point. According to an embodiment, the gate part 105 is manufactured of plate material. A suitable type of material is e.g. plastic material. Also other suitable materials are applicable.

The gate part 105 is according to an advantageous embodiment a laminar part. In the embodiments of the figures, the gate part is a circular plate part. Naturally, any other shape is possible in accordance with the target of application.

In the embodiment of the figures, the valve body 101 comprises the first wall part 109 and the second wall part 110 and the space 111 remaining between them for the gate element 102. The gate element is moved in the space 111 in the embodiment of the figure by means of an actuator 104. The actuator is in the embodiment of the figures fastened to the body by fastening means. In the embodiment of the figure, the gate element 102 is moved by turning i.e. rotating it around a rotation axis R. A drive shaft 122 of the actuator 104 is fastened to the gate element by coupling means 123. The drive shaft 122 is rotated from the position of Fig. 15 i.e. open position towards the position in which the gate element 102 closes the flow path 103. Fig. 16 shows a situation in which the gate element 102 is moving towards the closed position. The closed position is shown e.g. in Fig. 12.

The gate part 105 is arranged in the space 118 formed in the actuating part 108 freely movable along the actuating part 108 between the guide surfaces of the body part. According to an embodiment, the thickness of the gate part 105 substantially corresponds the thickness of the actuating part 108. It can also be somewhat thinner than it.

According to an embodiment, the actuating body 108 is a laminar part in which is formed the opening 118 in which the gate part 105 is arranged to fit. The opening 118 has been formed e.g. by die cutting or cutting, such as by laser cutting. Then, an arrangement fulfilling dimensional tolerances accurate enough is achieved. Correspondingly, the wall parts 109, 110 of the body can be of plate material and cut e.g. by laser cutting.

According to an advantageous embodiment, the valve can further comprise means 114, 126, 127, 128 for cleaning at least the space 11 between the walls 109, 110 of the body part of the part. Typically, the valve can comprise means 114, 126, 127, 128 for cleaning at least the space 111 between the walls 109, 110 of the body part of the part by spraying medium.

According to Fig. 16, medium, especially cleaning medium, can be conveyed from a medium source 126 with a pump device 127 along a channel 128 into the channel 113 inside the edge 112 of the body part and from that channel 113 via the openings 114 leading to the space 111 into the space 111. The openings 114 are typically arranged in the vicinity of the channel 103 in the figure especially in the area of the space 111 where the gate element 102 has to extend in the closed position. There can be openings arranged also elsewhere for the length of the edge 112 of the body part.

The body 101 thus comprises the edge part 112 into which is arranged the channel space 113 in which there is at least one opening 114, advantageously several openings, which opens to the space 111 between the first wall part 109 and the second wall part 110 for conveying medium into the space in question.

In the embodiment according to the figures, the edge part 112 is formed of a profile in which there are a channel part 112' and a support part 112". The channel part 112' comprises the channel space 113. The support part 112" is advantageously thinner in the cross direction than the channel part 112'. The support part 112" of the edge part forms as bent a support surface for the body walls 109, 110 of the gate valve.

The support part 112" of the edge part comprises notches 129, whereby the edge part 112 can be bent to be curved in the area comprising the notches 129.

The walls 109, 110 are arranged by fastening elements 131, 132 to the support part 112" of the edge part. Then, the support part 112" remains between the walls 109, 110. Into the support part 112" and at corresponding points on the walls 109, 110 are formed openings 130 through which the screw part of a screw element 131 operating as the fastening element extends and, from the opposite side, by means of a counter element, such as a nut element 132, the walls 109, 110 are sealed against the support part 112". The thickness of the support part 112" is advantageously somewhat greater than the thickness of the gate element.

In the embodiment according to the figures, the channel part 112' is arranged outside the outer edge of the walls 109, 110.

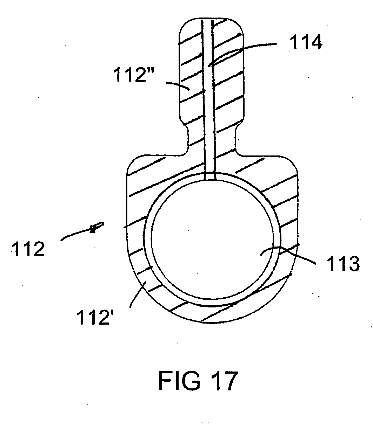

Fig. 17 further shows a cross-section of the edge part 112. It shows the channel part 112' comprising the channel 113 and the support part 112" thinner than the former. In addition, the opening 114 extending from the channel space 114 through the support part 112" is drawn in the figure. The opening 114 extends from the channel space 113 through the support part 112" of the edge part 112. The edge part 112 is formed according to an embodiment as a profile part, whereby the channel part 112' and the support part 112" are of the same piece.

The embodiment of the gate valve according to the figures is an extremely advantageous alternative for the welded structure. Then, inter alia, welding is avoided, whereby the assembly of the valve is very easy.

The laminar-structured valve of the embodiment is considerably advantageous and easy to manufacture especially in smallish production runs to e.g. casting-structured valve arrangements.

It is obvious to those skilled in the art that the invention is not limited to the embodiments described above, but it may be varied within the scope of the enclosed claims.

## Claims

1. A gate valve which comprises a body (1; 101), a gate element (2; 102) which is movable in the body in the cross direction in relation to a flow path (3; 103) between at least two positions, a first position in which the flow path (3; 103) is open, and a second position in which the flow path is closed, and means (4; 104) for moving the gate element (2; 102) between at least two said positions, in which the gate element (2; 102) comprises at least one gate part (5, 6; 105) and an actuating body (8; 108) along with which the gate part (5, 6; 105) is arranged to move in a space (11,111) between body walls (9, 10; 109, 110), **characterised in that** the body (1; 101) comprises an edge part (12; 112) into which is arranged a channel (13; 113) in which there is at least one opening (14; 114), advantageously several openings which opens to the space (11; 111) between the body walls, for conveying medium into the space in question.

2. A gate valve according to claim 1, **characterised in that** the gate part (5; 105) is arranged in a space (18; 118) formed in the actuating body (8; 108) freely moving along the actuating body (8; 108) between guide surfaces of the body so that a sealing surface of the gate part settles because of the pressure difference of the flow path (3; 103) prevailing on different sides of the gate part in the second position in the edge area of the flow path against at least one of the walls (9, 10; 109, 110).

3. A gate valve according to claim 1 or 2, **characterised in that** the gate part (5, 6; 105) is a laminar part.

4. A gate valve according to any one of claims 1-3, **characterised in that** the gate part (5, 6; 105) is of plastic material.

5. A gate valve according to any one of claims 1-4, **characterised in that** the gate part (5, 6; 105) is formed at least partially of elastic material.

6. A gate valve according to any one of claims 1-5, **characterised in that** the gate element (2) comprises two gate parts (5, 6) between (22) which gate parts (5, 6) is achievable a force effect which prevails in the gate parts (5, 6) in opposite directions in the direction of the flow path (3) pressing the gate parts (5, 6) towards the edges of the flow path at least in the position of the gate element in which the flow path is closed.

7. A gate valve according to claim 6, **characterised in that** between the gate parts (5, 6) is at least one elastic element (7).

8. A gate valve according to claim 6, **characterised in that** the valve comprises means for providing a force effect between the gate parts (5, 6) by means of pressure medium.

9. A gate valve according to claim 6, **characterised in that** the elastic element (7) is of rubber or equivalent elastic material.

10. A gate valve according to claim 6, **characterised in that** the elastic element (7) is a spring element.

11. A gate valve according to claim 6, **characterised in that** the elastic element (7) is a diaphragm spring element.

12. A gate valve according to any one of claims 1-11, **characterised in that** at least one of the gate parts (5, 6) comprises an opening (23) for conveying pressure medium into a space (22) between the gate parts (5, 6).

13. A gate valve according to any one of claims 1-12, **characterised in that** the actuating body (8) is a laminar part in which is formed the opening (18) into which the gate part (5, 6) and the elastic element (7) between them are arranged to fit.

14. A gate valve according to any one of claims 1-13, **characterised in that** the surface on the side of the flow channel of the first gate part (5) and the surface on the side of the flow channel of the second gate part (6) extend in the closed position of the valve to a greater distance in relation to each other in the direction of the flow channel than in the open position of the valve.

15. A gate valve according to any one of claims 1-14, **characterised in that** the gate element (102) is moved by turning it by an actuator (104) around a rotation axis R.

16. A gate valve according to any one of claims 1-15, **characterised in that** the actuating body (8; 108) is a laminar part in which is formed the opening (18; 118) into which the gate part (5, 6; 105) is arranged to fit.

17. A gate valve according to any one of claims 1-16, **characterised in that** the valve further comprises means (14, 26, 27, 28; 114, 126, 127, 128) for cleaning at least the space (11; 111) between the walls (9, 10; 109, 110) of the body.

18. A gate valve according to any one of claims 1-17, **characterised in that** the valve comprises means (14, 26, 27, 28; 114, 126, 127, 128) for cleaning at least the space (11; 111) between the walls (9, 10; 109, 110) of the body by spraying medium.

19. A gate valve according to any one of claims 1-18, **characterised in that** the edge part is formed of a profile in which there are a channel part (12'; 112') and a support part (12"; 112").

20. A gate valve according to claim 19, **characterised in that** the support part (12"; 112") of the edge part forms as bent a support surface for the body walls (9, 10; 109, 110) of the gate valve.

21. A gate valve according to any one of claims 19-20, **characterised in that** the support part (12"; 112") of the edge part comprises notches (29; 129), whereby the edge part (12; 112) is bent to be curved in the area comprising the notches (29; 129).

22. A gate valve according to any one of claims 19-21, **characterised in that** the walls (9, 10; 109, 110) are arranged by fastening elements (31, 32; 131, 132) into the support part (12"; 112") of the edge part.

23. A gate valve according to any one of claims 19-22, **characterised in that** the opening (14; 114) extends from the channel (13, 113) through the support part (12"; 112") of the edge part (12, 112).

## Patentansprüche

1. Schieberventil, das einen Körper (1; 101), ein Schieberelement (2; 102), das in dem Körper in der Querrichtung in Bezug auf einen Strömungspfad (3; 103) zwischen wenigstens zwei Stellungen, einer ersten Stellung, in der der Strömungspfad (3; 103) geöffnet ist, und einer zweiten Stellung, in der der Strömungspfad geschlossen ist, bewegbar ist, und eine Einrichtung (4; 104) zur Bewegung des Schieberelementes (2; 102) zwischen wenigstens zwei diesen Stellungen aufweist, wobei das Schieberelement (2; 102) wenigstens ein Schieberteil (5, 6; 105) und einen Betätigungskörper (8; 108) aufweist, mit dem gemeinsam das Schieberteil (5, 6; 105) eingerichtet ist, um sich in einem Zwischenraum (11; 111) zwischen Körperwänden (9, 10; 109, 110) zu bewegen, **dadurch gekennzeichnet, dass** der Körper (1; 101) ein Randteil (12; 112) aufweist, in dem ein Kanal (13; 113) angeordnet ist, in dem wenigstens eine Öffnung (14; 114), vorteilhafterweise mehrere Öffnungen, vorhanden ist, die in den Zwischenraum (11; 111) zwischen den Körperwänden mündet, um ein Medium in den betreffenden Zwischenraum zu befördern.

2. Schieberventil nach Anspruch 1, **dadurch gekennzeichnet, dass** das Schieberteil (5; 105) in einem Zwischenraum (18; 118), der in dem Betätigungskörper (8; 108) ausgebildet ist, sich entlang des Betätigungskörpers (8; 108) zwischen Führungsflächen des Körpers frei bewegend angeordnet ist, so dass sich eine Dichtungsfläche des Schieberteils aufgrund der Druckdifferenz des Strömungspfads (3; 103), die zwischen verschiedenen Seiten des Schieberteils in der zweiten Stellung in dem Randbereich des Strömungspfads herrscht, gegen wenigstens eine der Wände (9, 10; 109, 110) legt.

3. Schiebeventil nach Anspruch 1 oder 2, **dadurch gekennzeichnet, dass** das Schieberteil (5, 6; 105) ein lamellenförmiges Teil ist.

4. Schieberventil nach einem beliebigen der Ansprüche 1-3, **dadurch gekennzeichnet, dass** das Schieberteil (5, 6; 105) aus einem Kunststoffmaterial besteht.

5. Schieberventil nach einem beliebigen der Ansprüche 1-4, **dadurch gekennzeichnet, dass** das Schieberteil (5, 6; 105) wenigstens teilweise aus einem elastischen Material gefertigt ist.

6. Schieberventil nach einem beliebigen der Ansprüche 1-5, **dadurch gekennzeichnet, dass** das Schieberelement (2) zwei Schieberteile (5, 6) aufweist, wobei zwischen (22) den Schieberteilen (5, 6) eine Kraftwirkung erzielbar ist, die in den Schieberteilen (5, 6) in entgegengesetzte Richtungen in der Richtung des Strömungspfades (3) vorherrscht, wodurch die Schieberteile (5, 6) wenigstens in der Stellung des Schieberelementes, in der der Strömungspfad geschlossen ist, zu den Rändern des Strömungspfades hin gedrückt werden.

7. Schieberventil nach Anspruch 6, **dadurch gekennzeichnet, dass** zwischen den Schieberteilen (5, 6) wenigstens ein elastisches Element (7) vorhanden ist.

8. Schieberventil nach Anspruch 6, **dadurch gekennzeichnet, dass** das Ventil eine Einrichtung zur Erzielung einer Kraftwirkung zwischen den Schieberteilen (5, 6) mittels eines Druckmediums aufweist.

9. Schieberventil nach Anspruch 6, **dadurch gekennzeichnet, dass** das elastische Element (7) aus Gummi oder einem entsprechenden elastischen Material besteht.

10. Schieberventil nach Anspruch 6, **dadurch gekennzeichnet, dass** das elastische Element (7) ein Federelement ist.

11. Schieberventil nach Anspruch 6, **dadurch gekennzeichnet, dass** das elastische Element (7) ein Membranfederelement ist.

12. Schieberventil nach einem beliebigen der Ansprüche 1-11, **dadurch gekennzeichnet, dass** wenigstens einer der Schieberteile (5, 6) eine Öffnung (23) zur Einleitung von Druckmedium in einen Zwischenraum (22) zwischen den Schieberteilen (5, 6) aufweist.

13. Schieberventil nach einem beliebigen der Ansprüche 1-12, **dadurch gekennzeichnet, dass** der Betätigungskörper (8) ein lamellenförmiges Teil ist, in dem die Öffnung (18) ausgebildet ist, in der die Schieberteile (5, 6) und das elastische Element (7) zwischen diesen passend angeordnet sind.

14. Schieberventil nach einem beliebigen der Ansprüche 1-13, **dadurch gekennzeichnet, dass** sich die Oberfläche des ersten Schieberteils (5) auf der Seite des Strömungskanals und die Oberfläche des zweiten Schieberteils (6) auf der Seite des Strömungskanals in der Schließstellung des Ventils über eine größere Strecke in Bezug aufeinander in der Richtung des Strömungskanals als in der Offenstellung des Ventils erstrecken.

15. Schieberventil nach einem beliebigen der Ansprüche 1-14, **dadurch gekennzeichnet, dass** das Schieberelement (102) bewegt wird, indem es durch einen Aktuator (104) rings um eine Drehachse R gedreht wird.

16. Schieberventil nach einem beliebigen der Ansprüche 1-15, **dadurch gekennzeichnet, dass** der Betätigungskörper (8; 108) ein lamellenförmiger Teil ist, in dem die Öffnung (18; 118) ausgebildet ist, in der das Schieberteil (5, 6; 105) derart, dass es passt, angeordnet ist.

17. Schieberventil nach einem beliebigen der Ansprüche 1-16, **dadurch gekennzeichnet, dass** das Ventil ferner eine Einrichtung (14, 26, 27, 28; 114, 126, 127, 128) zur Reinigung wenigstens des Zwischenraums (11; 111) zwischen den Wänden (9, 10; 109, 110) des Körpers aufweist.

18. Schieberventil nach einem beliebigen der Ansprüche 1-17, **dadurch gekennzeichnet, dass** das Ventil eine Einrichtung, (14, 26, 27, 28; 114, 126, 127, 128) zur Reinigung wenigstens des Zwischenraums (11; 111) zwischen den Wänden (9, 10; 109, 110) des Körpers durch ein Sprühmedium aufweist.

19. Schieberventil nach einem beliebigen der Ansprüche 1-18, **dadurch gekennzeichnet, dass** das Randteil aus einem Profil geformt ist, in dem ein Kanalteil (12'; 112') und ein Stützteil (12"; 112") vorhanden sind.

20. Schieberventil nach Anspruch 19, **dadurch gekennzeichnet, dass** der Stützteil (12''; 112 ") des Randteils als ein gebogener Teil eine Stützfläche für die Körperwende (9, 10; 109, 110) des Schieberventils bildet.

21. Schieberventil nach einem beliebigen der Ansprüche 19-20, **dadurch gekennzeichnet, dass** der Stützteil (12" ; 112 ") des Randteils Einkerbungen (29; 129) aufweist, wobei das Randteil (12; 112) gebogen ist, um in dem die Einkerbungen (29; 129) aufweisenden Bereich gekrümmt zu sein.

22. Schieberventil nach einem beliebigen der Ansprüche 19-21, **dadurch gekennzeichnet, dass** die Wände (9, 10; 109, 110) durch Befestigungselemente (31, 32; 131, 132) in dem Stützteil (12 " ; 112 ") des Randteils angeordnet sind.

23. Schieberventil nach einem beliebigen der Ansprüche 19-22, **dadurch gekennzeichnet, dass** sich die Öffnung (14; 114) von dem Kanal (13, 113) durch den Stützteil (12 " ; 112 ") des Randteils (12, 112) hindurch erstreckt.

## Revendications

1. Vanne à tiroir qui comprend un corps (1 ; 101), un élément de tiroir (2 ; 102) qui est mobile dans le corps dans la direction transversale par rapport à un trajet d'écoulement (3 ; 103) entre au moins deux positions, une première position dans laquelle le trajet d'écoulement (3 ; 103) est ouvert, et une seconde position dans laquelle le trajet d'écoulement est fermé, et des moyens (4 ; 104) pour déplacer l'élément de tiroir (2 ; 102) entre lesdites au moins deux positions, dans lequel l'élément de tiroir (2 ; 102) comprend au moins une partie formant tiroir (5, 6 ; 105) et un corps d'actionnement (8 ; 108) le long duquel la partie formant tiroir (5, 6 ; 105) est agencée pour se déplacer dans un espace (11 ; 111) entre des parois (9, 10 ; 109, 110) du corps, **caractérisée en ce que** le corps (1 ; 101) comprend une partie de bordure (12 ; 112) dans laquelle est agencé un canal (13 ; 113) dans lequel est prévue au moins une ouverture (14 ; 14), avantageusement plusieurs ouvertures, qui s'ouvre vers l'espace (11 ; 111) entre les parois du corps, pour transporter un fluide vers l'espace en question.

2. Vanne à tiroir selon la revendication 1, **caractérisée en ce que** la partie formant tiroir (5 ; 105) est agencée dans un espace (18 ; 118) formé dans le corps d'actionnement (8 ; 108) et se déplace librement le long du corps d'actionnement (8 ; 108) entre des surfaces de guidage du corps, de sorte qu'une surface d'étanchement de la partie formant tiroir s'établit en raison de la différence de pression dans le trajet d'écoulement (3 ; 103) qui règne sur des côtés différents de la partie formant tiroir dans la seconde position dans la zone de bordure du trajet d'écoulement contre l'une au moins des parois (9, 10 ; 109, 110).

3. Vanne à tiroir selon la revendication 1 ou 2, **caractérisée en ce que** la partie formant tiroir (5, 6 ; 105) est une partie laminaire.

4. Vanne à tiroir selon l'une quelconque des revendications 1 à 3, **caractérisée en ce que** la partie formant tiroir (5, 6 ; 105) et en matière plastique.

5. Vanne à tiroir selon l'une quelconque des revendications 1 à 4, **caractérisée en ce que** la partie formant tiroir (5, 6 ; 105) est formée au moins partiellement en matériau élastique.

6. Vanne à tiroir selon l'une quelconque des revendications 1 à 5, **caractérisée en ce que** l'élément formant tiroir (2) comprend deux parties de tiroir (5, 6), et entre (22) lesdites parties formant tiroir (5, 6) il est possible d'atteindre un effet de force qui règne dans les parties de tiroir (5, 6) en directions opposées dans la direction du trajet d'écoulement (3), en pressant les parties de tiroir (5, 6) vers les bords du trajet d'écoulement, au moins dans la position de l'élément formant tiroir dans laquelle le trajet d'écoulement est fermé.

7. Vanne à tiroir selon la revendication 6, **caractérisée en ce qu'**il est prévu au moins un élément élastique (7) entre les parties de tiroir (5, 6).

8. Vanne à tiroir selon la revendication 6, **caractérisée en ce que** la vanne comprend des moyens pour assurer un effet de force entre les parties de tiroir (5, 6) au moyen d'un fluide sous pression.

9. Vanne à tiroir selon la revendication 6, **caractérisée en ce que** l'élément élastique (7) est en caoutchouc ou en matériau élastique équivalent.

10. Vanne à tiroir selon la revendication 6, **caractérisée en ce que** l'élément élastique (7) est un élément à ressort.

11. Vanne à tiroir selon la revendication 6, **caractérisée en ce que** l'élément élastique (7) est un élément à ressort en diaphragme.

12. Vanne à tiroir selon l'une quelconque des revendications 1 à 11, **caractérisée en ce que** l'une au moins des parties de tiroir (5, 6) comprend une ouverture (23) pour laisser passer un fluide sous pression vers un espace (22) entre les parties de tiroir (5, 6).

13. Vanne à tiroir selon l'une quelconque des revendications 1 à 12, **caractérisée en ce que** le corps d'actionnement (8) est une partie laminaire dans laquelle est formée l'ouverture (18) dans laquelle sont agencés de manière ajustée les parties de tiroir (5, 6) et l'élément élastique (7) entre elles.

14. Vanne à tiroir selon l'une quelconque des revendications 1 à 13, **caractérisée en ce que** la surface sur le côté du canal d'écoulement de la première partie de tiroir (5) et la surface du côté du canal d'écoulement de la seconde partie de tiroir (6) s'étendent, dans la position fermée de la vanne, à une distance plus grande en relation l'une par rapport à l'autre dans la direction du canal d'écoulement que dans la position ouverte de la vanne.

15. Vanne à tiroir selon l'une quelconque des revendications 1 à 14, **caractérisée en ce que** l'élément formant tiroir (102) est déplacé en le faisant tourner au moyen d'un actionneur (104) autour d'un axe de rotation R.

16. Vanne à tiroir selon l'une quelconque des revendications 1 à 15, **caractérisée en ce que** le corps d'actionnement (8 ; 108) est une partie laminaire dans laquelle est formée l'ouverture (18 ; 118) dans laquelle est agencée la partie de tiroir (5, 6 ; 105) de manière ajustée.

17. Vanne à tiroir selon l'une quelconque des revendications 1 à 16, **caractérisée en ce que** la vanne comprend encore des moyens (14, 26, 27, 28 ; 114, 126, 127, 128) pour nettoyer au moins l'espace (11 ; 111) entre les parois (9, 10 ; 109, 110) du corps.

18. Vanne à tiroir selon l'une quelconque des revendications 1 à 17, **caractérisée en ce que** la vanne comprend des moyens (14, 26, 27, 28 ; 114, 126, 127, 128) pour nettoyer au moins l'espace (11 ; 111) entre les parois (9, 10 ; 109, 110) du corps en pulvérisant un fluide.

19. Vanne à tiroir selon l'une quelconque des revendications 1 à 18, **caractérisée en ce que** la partie de bordure est formée d'un profilé dans lequel sont ménagées une partie de canal (12' ; 112') et une partie de support (12" ; 112").

20. Vanne à tiroir selon la revendication 19, **caractérisée en ce que** la partie de support (12" ; 112") de la partie de bordure forme, lorsqu'elle est cintrée, une surface de support pour les parois (9, 10 ; 109, 110) du corps de la vanne à tiroir.

21. Vanne à tiroir selon l'une quelconque des revendications 19 à 20, **caractérisée en ce que** la partie de support (12" ; 112") de la partie de bordure comprend des encoches (29 ; 129), grâce à quoi la partie de bordure (12 ; 112) est cintrée pour devenir incurvée dans la zone comprenant les encoches (29 ; 129).

22. Vanne à tiroir selon l'une quelconque des revendications 19 à 21, **caractérisée en ce que** les parois (9, 10 ; 109, 110) sont agencées par des éléments de fixation (31, 32 ; 131, 132) dans la partie de support (12" ; 112") de la partie de bordure.

23. Vanne à tiroir selon l'une quelconque des revendications 19 à 22, **caractérisée en ce que** l'ouverture (14 ; 114) s'étend depuis le canal (13, 113) à travers la partie de support (12" ; 112") de la partie de bordure (12, 112).
